# EUROPÄISCHE PATENTSCHRIFT

(11) **EP 1 247 026 B1**
(45) Veröffentlichungstag und Bekanntmachung des Hinweises auf die Patenterteilung: **02.09.2009**
(21) Anmeldenummer: 00991800.4
(22) Anmeldetag: 22.12.2000
(51) Int. Cl.: F16C 32/04

(54) **MAGNETISCHES LAGERSYSTEM**
MAGNETIC BEARING SYSTEM
SYSTEME DE SUSPENSION MAGNETIQUE

(30) Priorität: 27.12.1999 AT 218499
(43) Veröffentlichungstag der Anmeldung: 09.10.2002
(73) Patentinhaber: Lust Antriebstechnik GmbH, 35633 Lahnau (DE)
(72) Erfinder: SILBER, Siegfried, A-4202 Kirchschlag (AT); AMRHEIN, Wolfgang, A-4100 Ottensheim (AT)
(74) Vertreter: Knefel, Cordula
(86) Internationale Anmeldenummer: PCT/EP2000/013146
(87) Internationale Veröffentlichungsnummer: WO 2001/048389

(56) Entgegenhaltungen:
- US-A- 3 877 761
- US-A- 3 890 019
- US-A- 4 387 935
- US-A- 4 468 801
- US-A- 5 111 102
- US-A- 5 347 190
- US-A- 5 398 571
- US-A- 5 514 924

## Beschreibung

Die Erfindung betrifft eine Anordnung zur Erzeugung von elektromagnetischen Kräften zwecks berührungsfreier magnetischer Lagerung von Rotoren in rotierenden Antrieben sowie Läufern in Linearantrieben.

Die Magnetlagertechnik erschließt Applikationsfelder des Maschinen- und Gerätebaus mit äußerst hohen Anforderungen an den Drehzahlbereich, die Lebensdauer, die Reinheit und die Dichtheit des Antriebssystems - also im wesentlichen Anwendungsgebiete, die unter Verwendung konventioneller Lagertechniken nicht oder nur schwer realisierbar sind. Verschiedene Ausführungen, wie beispielsweise Hochgeschwindigkeitsfräs- und Schleifspindeln, Turbokompressoren, Vakuumpumpen, oder Pumpen für hochreine chemische oder medizinische Erzeugnisse werden bereits mit Magnetlagern ausgerüstet.

In der Literatur (Permanent Magnet Biased Magnetic Bearings - Design, Construction and Testing, Veröffentlicht: 2nd International Symposium on Magnetic Bearing, July 12-14, 1990, Tokyo, Japan; Magnetic Bearing Design for Reduced Power Consumption, Veröffentlicht: ASME Transactions on Tribology, Vol. 118, No 4, Oct. 96, pp 839-846....) gibt es Vorschläge, die Verlustleistung von Magnetlagersystemen durch eine permanentmagnetische Vormagnetisierung wesentlich zu reduzieren. Dabei wird die Tatsache ausgenutzt, dass die Krafterzeugung in magnetischen Kreisen eine quadratische Funktion der Flussdichte ist. Wird einer konstanten Vormagnetisierung eine zusätzliche Magnetisierung überlagert, ist die Erzeugung von großen Tragkräften bei nur kleinen Spulendurchflutungen möglich.

Zum Stand der Technik (US 5,398,571 A) gehört ein Magnetlager, welches lediglich einen Permanentmagneten aufweist. Dieser Permanentmagnet ist vorgesehen, um eine Gewichtskraftkompensation in eine Richtung durchzuführen.

Die Regelung dieses Magnetlagers beinhaltet eine Hauptkomponente und eine Hilfskomponente, die aufeinander abgestimmt werden. Diese beiden Komponenten sind abhängig voneinander, das heißt die beiden Regelsysteme beeinflussen sich gegenseitig. Hierdurch weist diese zum Stand der Technik gehörende Vorrichtung den Nachteil auf, dass eine aufwändige elektronische Ansteuerung vorhanden ist.

Zum Stand der Technik (US 4,468,801 A) gehört darüber hinaus ein magnetisches Lagersystem, bei dem mehrere Magneten in axialer Richtung verteilt angeordnet sind, das heißt, entlang des Luftspaltumfanges weist die Flussrichtung jeweils die gleiche Richtung auf.

Weiterhin gehört zum Stand der Technik (US 4,387,935 A) ein magnetisches Linearlagersystem mit elektromagnetischen und permanent magnetischen Polen, bei dem ein analoger Linearverstärker vorgesehen ist.

Das durch die Erfindung zu lösende technische Problem besteht einerseits in der Vereinfachung des mechanischen Aufbaus eines Magnetlagers und andererseits in der Reduktion der Leistungsaufnahme im Vergleich zu konventionellen Magnetlagern mit Gleichstromvormagnetisierung. Darüber hinaus soll ein Magnetlager mit einer einfachen und damit kostengünstigen elektronischen Ansteuerung angegeben werden.

Dieses technische Problem wird durch ein magnetisches Lagersystem mit den Merkmalen des Anspruches 1 gelöst.

Dadurch, dass das magnetisches Lagersystem aus mindestens einem Radiallager, wenigstens einer Ansteuereinheit und Stator-und Rotorelementen zur Erzeugung von radialen Kräften besteht, wobei die flussbildenden und flussführenden Stator- und Rotorelemente aus ferromagnetischen Teilen, Spulen und Permanentmagneten gebildet werden, und dadurch, dass in dem Stator des Radiallagers zwischen elektromagnetischen Polen mit mindestens einer Spule permanentmagnetische Pole mit mindestens einem Permanentmagnet als eigenständiger Pol ausgebildet sind und in einer Weise angeordnet sind, dass im Luftspalt in den Winkelbereichen der elektromagnetischen Pole ein magnetischer Spannungsabfall durch die von den Permanentmagneten erzeugten Flüsse entsteht, ist der mechanische Aufbau dieses Lagers sehr einfach.

Dadurch, dass die Permanentmagnete derart über dem Umfang verteilt angeordnet sind, dass sich die durch Permanentmagnete ausgelösten Radialkräfte, die auf den Rotor wirken, gegenseitig kompensieren und dadurch, dass die Spulen oder Spulensätze der elektromagnetischen Pole stern- oder dreiecksförmig verschaltet sind und mit Leistungshalbleitern in Halbbrückenschaltung gespeist werden, kann neben einem sehr einfachen mechanischen Aufbau auch eine einfache und damit kostengünstige elektronische Ansteuerung realisiert werden.

Alternativ, wenn der Betrieb des Lagers mit einer Stromsumme ungleich Null erfolgen soll. werden die Spulen oder Spulensätze der elektromagnetischen Pole über Leistungshalbleiter in Vollbrückenschaltung unabhängig gespeist.

Durch eine weitestgehend ebene Anordnung von elektromagnetischen Polen und permanentmagnetischen Polen wird in den Luftspalten zum Rotor, selbst im stromlosen Zustand, ein magnetischer Fluss erzeugt. Wird dieser Fluss mit einem Steuerfluss moduliert, können magnetische Kräfte zwecks magnetischer Lagerung auf den Rotor ausgeübt werden. Mit dieser Anordnung ist eine sehr einfache mechanische Ausführung von Magnetlagern mit wenigen sehr einfach ausgeführten elektromagnetischen und permanentmagnetischen Polen möglich. Ein großer Vorteil ist auch, dass der ferromagnetische Teil des Stators und insbesondere des Statorrückschlusses aus einem Teil gefertigt werden kann und damit Probleme der Montage und insbesondere die Probleme der Positionierungstoleranzen verschiedener zu fügender Einzelteile entfallen. Dieser Tatsache ist besondere Bedeutung beizumessen, da insbesondere die Permanentmagnete im allgemeinen nur mit sehr großen Toleranzen in den Abmessungen hergestellt werden können.

Gemäß der Erfindung besteht die Möglichkeit, die Anzahl der Pole frei zu wählen, wobei gegebenenfalls die Anzahl der permanentmagneterregten Pole mit den elektromagnetisch erregten Pole übereinstimmen kann, wobei wiederum die Möglichkeit besteht, einige Schenkel nicht mit Spulen zu bewickeln.

Eine erste Ausführungsform des erfindungsgemäßen Lagers ist derart aufgebaut, dass der durch die Permanentmagnete erzeugte magnetische Fluss jeweils durch die Schenkel der elektromagnetischen Pole verläuft und somit für den magnetischen Spannungsabfall in den Luftspalten (in weiterer Folge auch als Vormagnetisierung bezeichnet) verantwortlich ist. Der durch Bestromung der Spule erzeugte magnetische Fluss schließt sich weitestgehend über die Schenkel der benachbarten elektromagnetischen Pole. Nur ein vernachlässigbarer Flussanteil wird sich über Streuwege schließen. Damit kommt es in dem Luftspalt des bestromten elektromagnetischen Poles zu einer Erhöhung der Flussdichte. Hingegen nimmt die Flussdichte in den Luftspalten der benachbarten elektromagnetischen Pole ab.

Gemäß der Erfindung sind gemäß einer Ausführungsform die permanentmagnetischen Pole derart ausgebildet und angeordnet, dass zumindest im stromlosen Zustand der Luftspaltfluss in den Bereichen dieser Pole entweder gemeinsam nach innen oder nach außen gerichtet ist.

Der wesentliche Vorteil dieser Anordnung besteht darin, dass der durch die Spulen erzeugte magnetische Fluss nur durch die Luftspalte der elektromagnetisch erregten Polausbildungen, jedoch nicht durch die magnetisch schlecht leitfähigen Permanentmagnete verläuft, so dass mit einer kleinen Spulendurchflutung bereits eine große Änderung der Flussdichte erreicht werden kann. Somit kann die elektrische Leistungsaufnahme des Lagers gegenüber konventionellen Spulenlagern mit Gleichstrommagnetisierung drastisch reduziert werden.

Vorteilhaft ist gemäß der Erfindung vorgesehen, dass über den Betrag und das Vorzeichen der Spulenströme der Luftspaltfluss in den Winkelbereichen der elektromagnetischen Pole derart einstellbar ist, dass dieser aus einer elektromagnetischen und einer permanentmagnetischen Komponente bestehende Fluss in den Luftspaltbereichen unterschiedlicher elektromagnetischer Pole verschieden groß ist und somit über die Steuerung der Spulenströme eine bestimmte am Rotor resultierende Radialkraft eingeprägt wird. Das hat des Vorteil, dass bereits mit einer kleinen Änderung der Spulenströme große Radialkräfte erzeugt werden können.

Die elektromagnetischen Pole und die permanentmagnetischen Pole eines Radiallagers liegen vorzugsweise im wesentlichen in einer Ebene.

Vorteilhaft sind die permanentmagnetischen Pole derart ausgebildet und angeordnet, dass der Steuerflussanteil der elektromagnetischen Pole, der sich über die permanentmagnetischen Pole schließt, kleiner ist als der Anteil, der sich über die elektromagnetischen Pole schließt. Es ist auch möglich, dass der Steuerfluss der elektromagnetischen Pole sich praktisch nicht oder nur zu einem unwesentlichen Teil über die permanentmagnetischen Pole schließt.

Vorzugsweise sind die permanentmagnetischen Pole derart ausgebildet und angeordnet, dass die Magnete mit einer Seitenfläche an den Luftspalt grenzen. Diese Maßnahme ist vorteilhaft, weil dadurch der magnetische Streufluss minimal wird.

Die permanentmagnetischen Pole sind vorteilhaft derart ausgebildet und angeordnet, dass die Begrenzungsfläche zum Luftspalt durch ferromagnetisches Material, insbesondere durch Polschuhe, gebildet wird. Das hat den Vorteil einer Veränderung der Flussdichte, insbesondere einer Flussdichtereduktion, im Luftspalt zwischen der permanentmagnetischen Polausbildung und der Welle durch eine Querschnittsänderung des Polschuhs.

Die permanentmagnetischen Pole sind gemäß einer weiteren bevorzugten Ausführungsform derart ausgebildet und angeordnet, dass der Magnet in ferromagnetisches Material eingebettet ist, wobei ein magnetischer Kurzschlussfluss der Magnete durch entsprechend dünne in der magnetischen Sättigung betriebene Flussleitstücke begrenzt wird. Das hat den Vorteil einer einfachen und kostengünstigen Montage der Magneten. Weiter bildet das ferromagnetische Material einen mechanischen Schutz, so dass die mechanische Robustheit des Lagers wesentlich verbessert wird.

Kostenmäßig vorteilhaft ist eine schenkelförmige Ausbildung der elektromagnetischen Pole mit konzentrierten Spulen.

Die Spulen können auch verteilt und gesehnt ausgeführt sein, was den Vorteil hat, dass die Durchflutungsverteilungen im Stator den Erfordernissen des Lagers angepasst werden können.

Zur mechanischen Vereinfachung des Lagers ist es möglich, dass einige ferromagnetische Polausbildungen im Stator ohne Verwendung von Spulen neben den permanentmagnetischen Polen und/oder den elektromagnetischen Polen angeordnet sind.

Die magnetische Führung der permanentmagnetischen und elektromagnetischen Flussanteile im Rotor kann durch die ferromagnetische Welle selbst erfolgen. Der Vorteil liegt darin, dass die Welle aus einem einzigen Stück besteht.

Für höhere Drehzahlen, oder wenn der Wellenwerkstoff nicht ferromagnetisch sein darf, kann die Führung der permanentmagnetischen und elektromagnetischen Flussanteile im Rotor durch weichmagnetische massiv oder geblecht ausgeführte Materialien erfolgen

Infolge einer entsprechenden Steuerung der Spulenströme ergibt die Summe der über den gesamten Luftspaltumfang summierten Flüsse vorteilhaft einen Wert gleich Null, so dass die vereinfachte Leistungselektronik, bestehend aus einer Halbbrücke pro Strang eingesetzt werden kann.

Die elektromagnetischen Pole sind vorteilhaft durch eine entsprechende Gestaltung der Polgeometrie, insbesondere durch eine weitgehend parallele Ausbildung der Seitenflächen der Flussleitstücke oder durch das Einbringen von Querschnittsverkleinerungen im Bereich des Luftspaltes, derart aufgebaut, dass keine starken Flussaufweitungen zum Luftspalt hin gebildet werden, um über eine hohe Flussdichte günstige Voraussetzungen für die Kraftbildung zu schaffen.

Das erfindungsgemäße Lagersystem ist vorzugsweise derart ausgebildet, dass die permanentmagnetischen Pole durch eine entsprechende Gestaltung der Polgeometrie derart aufgebaut sind, dass keine starken Flusskonzentrationen zum Luftspalt hin gebildet werden, um bei einer Auslenkung der Welle vom Lagermittelpunkt den destabilisierenden Einfluss des Permanentmagnetfeldes in den Bereichen des Luftspaltes über den permanentmagnetischen Pol sowie die Eisenverluste im Rotor klein zu halten.

Die elektromagnetischen Pole und die permanentmagnetischen Pole sind bevorzugt durch eine entsprechende Gestaltung der Polgeometrie, insbesondere durch eine hinterschnittsfreie Ausbildung der elektromagnetischen Polschenkel derart aufgebaut, dass zwecks einer einfachen und kostengünstigen Montage vorgefertigte Spulen über die elektromagnetischen Pole geschoben werden können.

Vorteilhaft weisen die permanentmagnetischen Pole und/oder die elektromagnetischen Pole seitliche Einbuchtungen oder Einschnitte auf, um die magnetische Streuung zwischen den Polen klein zu halten.

Über eine entsprechende Steuerung der Spulenströme des Radiallagers oder der Radiallager wird vorteilhaft eine Summe der über den gesamten Luftspaltumfang addierten Flüsse mit einem Summenwert ungleich Null eingeprägt, so dass ein Flussanteil sich über die Welle und einem Rückschluss über die Statoren schließt und sich durch die asymmetrische, insbesondere axial versetzte Lage von Stator und Rotor neben der radialen auch eine axiale Kraftentfaltung einstellt.

Vorteilhaft sind die an den Luftspalt grenzenden Statorflächen und Rotorflächen der beiden Radiallager konisch derart ausgebildet, dass jedes dieser Radiallager über die von den Spulen der elektromagnetischen Pole erzeugte Steuerflüsse und dem permanentmagnetischen Flussanteil sowohl radiale als auch axiale Kraftkomponenten aufbauen kann.

Das erfindungsgemäße Lagersystem weist vorteilhaft Sensoren und/oder Beobachter zur Ermittlung von Wegsignalen auf. Die Ansteuereinheit weist wiederum eine Steuer- und eine Leistungselektronik auf.

Die Stator- und Rotorelemente sind erfindungsgemäß zur Erzeugung von radialen und axialen Kräften vorgesehen.

Die minimale Anzahl der erforderlichen Spulen für die erfindungsgemäße Lösung hängt von der Zahl der zu stabilisierenden Freiheitsgrade ab. Sollen zwei Freiheitsgrade stabilisiert werden, sind mindestens zwei Spulen erforderlich. Wird die erfindungsgemäße Anordnung mit drei Spulen zur Stabilisierung von zwei Freiheitsgraden eingesetzt, kann eine Strangstromsumme von Null gefordert werden. Damit besteht die Möglichkeit, die Stränge im Stern oder Dreieck zu verschalten, wodurch eine sehr einfache Leistungsendstufe bestehend aus nur drei Halbbrücken zur Ansteuerung verwendet werden kann.

Ist die Ausführung eines scheibenförmigen Rotors möglich und treten nur kleine Kräfte in axialer Richtung auf, kann das Magnetlager mit Vormagnetisierung (durch die abwechselnde Orientierung der Flussdichte in den Luftspalten der permanentmagneterregten Pole und der elektromagnetisch erregten Pole wird dieses Magnetlager in der Folge als Multipollager bezeichnet) zur Stabilisierung von fünf Freiheitsgraden genutzt werden. Die Stabilisierung der beiden radialen Freiheitsgrade in der Rotorebene kann dabei aktiv erfolgen. Hingegen ist eine Stabilisierung in axialer Richtung und in Kipprichtung durch die Reluktanzkräfte möglich.

Eine weitere Ausführungsform der Erfindung ermöglicht die aktive Stabilisierung von fünf Freiheitsgraden mit zwei Multipol-Teillagern. Die Teillager können grundsätzlich äquivalent aufgebaut werden. Mindestens eines der beiden Multipollager muss allerdings mindestens drei Spulen enthalten, die getrennt angesteuert werden. Wird sowohl die Welle als auch der Rückschluss aus ferromagnetischem Material aufgebaut, entsteht ein weiterer Flusspfad, der wiederum, abgesehen von den Luftspalten, vollständig im ferromagnetischen Material verläuft.

Ein hinsichtlich des fertigungstechnischen Aufwands sowie der Betriebsparameter für eine bestimmte Applikation optimiertes sechs-schenkeliges Multipollager ist gemäß der Erfindung ebenfalls möglich. Die drei Permanentmagnete sind bei dieser Ausführung in der radialen Ebene vollständig von ferromagnetischen Material umgeben.

Dadurch ist einerseits eine sehr kostengünstige Fertigung möglich, da keine eng tolerierten Permanentmagnete erforderlich sind. Andererseits ist das spröde Magnetmaterial vollständig vom Blechschnitt umgeben, so dass keine mechanischen Kräfte auf das Magnetmaterial wirken können. Damit ein magnetischer Kurzschluss der Permanentmagnete vermieden wird, müssen die Flussleitstücke so dünn ausgeführt werden, dass in diesen Bereichen das ferromagnetische Material in Sättigung geht. Durch die mechanische Robustheit dieses Lagers, ist ein Einsatz in Applikationen möglich, bei denen aufgrund der mechanischen Beanspruchung eine PM-Vormagnetisierung bislang nicht möglich war.

Das Betriebs- und Regelverhalten von Magnetlagern ist im wesentlichen durch den Strom-Kraft-Faktor und den Weg-Kraft-Faktor gekennzeichnet. Der Strom-Kraft-Faktor beschreibt dabei den Zusammenhang zwischen den Strangströmen und den Tragkräften. Der Weg-Kraft-Faktor beschreibt hingegen die Änderung der auf den Rotor wirkenden Kraft bei einer Verschiebung desselben. Somit ist der Kraft-Weg-Faktor ein Maß für die "Instabilität". Für den Betrieb ist ein möglichst großer Strom-Kraft-Faktor und gleichzeitig ein kleiner Weg-Kraft-Faktor wünschenswert. Durch die Verjüngung der elektromagnetischen Pole wird ein hoher Strom-Kraft-Faktor bei gleichzeitiger Minimierung des magnetischen Streuflusses erzielt. Einer Reduktion des Weg-Kraft-Faktors kann durch eine möglichst große Schenkelstirnfläche des permanentmagnetischen Pols Rechnung getragen werden. Die Einschnürung dient wiederum einer Streuflussminimierung.

Weitere Einzelheiten der Erfindung können den Unteransprüchen entnommen werden.

Auf der Zeichnung ist ein Ausführungsbeispiel der Erfindung dargestellt, und zwar zeigen:
- Fig. 1: einen Querschnitt durch eine erfindungsgemäße Anordnung;
- Fig. 2: eine graphische Darstellung einer an einem ferromagnetischen Körper angreifenden Kraft;
- Fig. 3: eine schematische Darstellung einer Leistungsendstufe;
- Fig. 4: eine Darstellung der Stabilisierung eines Rotors in axialer Richtung;
- Fig. 5: eine Darstellung der Stabilisierung eines Rotors in Kipprichtung;
- Fig. 6a: einen Schnitt durch ein Multipol-Lager;
- Fig. 6b: einen Schnitt nach der Linie A-A der Fig. 6a;
- Fig. 6c: einen Schnitt nach der Linie B-B der Fig. 6a;
- Fig. 7: ein geändertes Ausführungsbeispiel;
- Fig. 8: ein geändertes Ausführungsbeispiel mit Spulen im Statorjoch;
- Fig. 9: einen Schnitt durch ein Lager mit vier Spulensystemen in symmetrischer Anordnung;
- Fig. 10: einen Schnitt durch ein Lager mit zwei gegenüberliegenden permanentmagnetischen Polen;
- Fig. 11: einen Schnitt durch ein Lager mit mehreren nebeneinander angeordneten elektromagnetischen Polen;
- Fig. 12: einen Schnitt durch ein Lager mit mehreren nebeneinander angeordneten elektromagnetischen Polen mit zum Teil unterschiedlichen Magnetisierungsrichtungen.

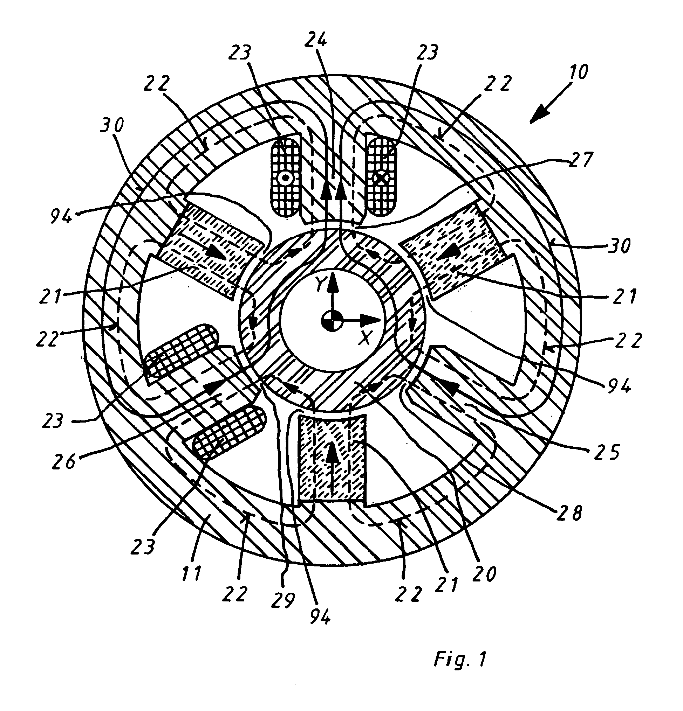

In der Fig. 1 ist ein Magnetlager (10) mit einem Stator (11) und einem Rotor (20) dargestellt. Das Magnetlager (10) weist drei permanentmagnetische Pole (21) auf sowie drei elektromagnetisch erregte Pole (24, 25, 26). Die Anzahl der permanentmagnetischen Pole (21) entsprechen der Anzahl der elektromagnetisch erregten Pole (24, 25, 26). Das Lager (10) weist also eine sechs-schenkelige Anordnung auf. Der Schenkel (24) ist mit einer Spule (23) umwickelt. Der Schenkel des elektromagnetischen Pols (25) ist nicht mit Spulen bewickelt.

Der durch die Permanentmagnete (21) erzeugte magnetische Fluss (22) verläuft jeweils durch benachbarte Schenkel und ist somit für den magnetischen Spannungsabfall in den Luftspalten (27, 28, 29) (in weiterer Folge auch als Vormagnetisierung bezeichnet) verantwortlich. Der durch Bestromung der Spule (23) erzeugte magnetische Fluss (30) schließt sich weitestgehend über die Schenkel (25, 26). Nur ein vernachlässigbarer Flussanteil wird sich über die Streuwege schließen. Damit kommt es in einem Luftspalt (27) zu einer Erhöhung der Flussdichte. Hingegen nimmt die Flussdichte in den Luftspalten (28, 29) ab.

Der wesentliche Vorteil dieser Anordnung besteht darin, dass der durch die Spule (23) erzeugte magnetische Fluss nur durch die Luftspalte (27, 28, 29) der elektromagnetisch erregten Pole (24, 25, 26), jedoch nicht durch die magnetisch schlecht leitfähigen Permanentmagnete (21) verläuft, so dass mit einer kleinen Spulendurchflutung bereits eine große Änderung der Flussdichte erreicht werden kann.

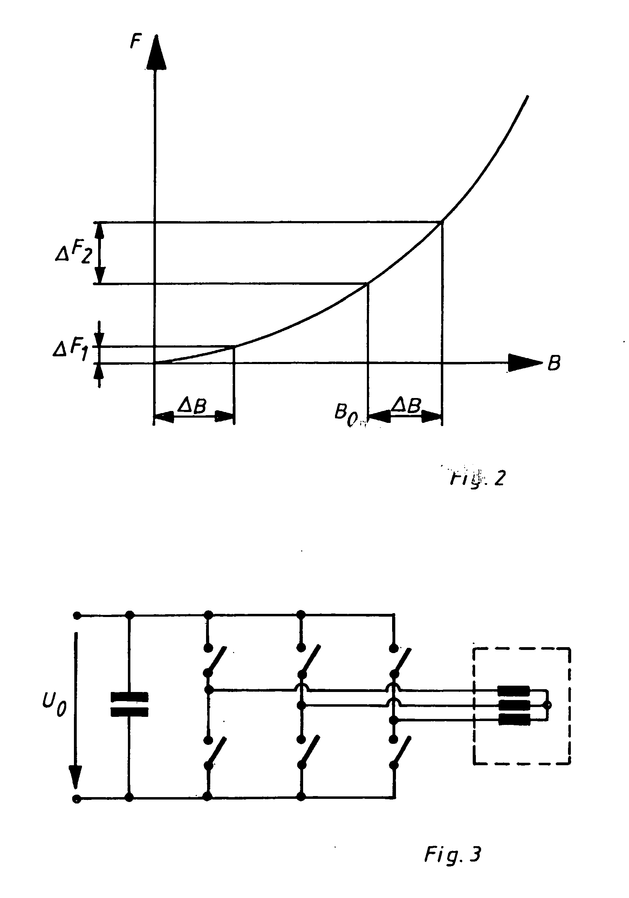

Die an einem ferromagnetischen Körper angreifende magnetische Kraft F ist, wie in Fig. 2 dargestellt, eine quadratische Funktion der Flussdichte B. Weiter nimmt die magnetische Kraft linear mit der Fläche der ferromagnetischen Oberflächenelemente zu. Ohne Vormagnetisierung ergibt sich mit einer Änderung der Luftspaltflussdichte von Δ*B* eine Änderung der Normalkomponente der magnetischen Kraft von Δ*F*₁. Durch eine Vormagnetisierung *B*₀ kann bei gleicher Änderung der Flussdichte Δ*B* eine wesentliche Erhöhung der magnetischen Kraft von Δ*F₂* erzielt werden. Soll also mit dem in Fig. 1 dargestellten Magnetlager (10) eine bestimmte Tragkraft erzeugt werden, so ist ohne Vormagnetisierung eine große Änderung der Flussdichte - und damit eine große Stromänderung - hingegen mit Vormagnetisierung eine nur kleine Änderung der Flussdichte nötig.

Bei einer Bestromung der Spule (23) des in Fig. 1 dargestellten Lagers (10) in gezeigter Richtung bewirkt die Flussdichteerhöhung im Luftspalt (27) eine Tragkraft in positiver y-Richtung. Durch die Verringerung der Flussdichten in den Luftspalten (28, 29) kommt es gegenüber dem unbestromten Fall ebenfalls zu einer Verstärkung der Tragkraft in y-Richtung. Sind alle Spulen unbestromt und befindet sich der Rotor (20) im geometrischen Mittelpunkt, sind die Flussdichten in den Luftspalten (27, 28, 29) gleich groß, so dass die resultierende Kraft auf den Rotor (20) verschwindet. Wird hingegen der Rotor (20) bei unbestromten Wicklungssystemen vom geometrischen Mittelpunkt ausgelenkt, bilden sich in den Luftspalten (27, 28, 29) unterschiedliche Flussdichten aus, so dass eine resultierende Kraft auf den Rotor (20) entsteht. Diese Kraft kann herangezogen werden, um mit der Verschiebung der Wellenachse statische Tragkräfte zu kompensieren.

Die minimale Anzahl der erforderlichen Spulen für die erfindungsgemäße Lösung hängt von der Zahl der zu stabilisierenden Freiheitsgrade ab. Sollen zwei Freiheitsgrade stabilisiert werden, sind mindestens zwei Spulen erforderlich. Wird die beschriebene Anordnung mit drei Spulen zur Stabilisierung von zwei Freiheitsgraden eingesetzt, kann eine Strangstromsumme von Null gefordert werden. Damit besteht die Möglichkeit, die Stränge im Stern oder Dreieck zu verschalten, wodurch eine sehr einfache Leistungsendstufe, bestehend aus nur drei Halbbrücken, wie in Fig. 3 dargestellt, zur Ansteuerung verwendet werden kann.

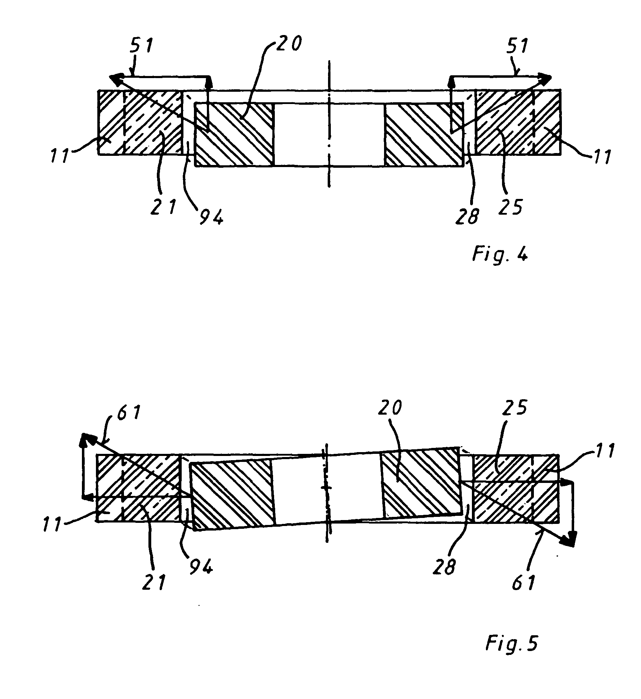

Ist die Ausführung eines scheibenförmigen Rotors möglich und treten nur kleine Kräfte in axialer Richtung auf, kann das Magnetlager mit Vormagnetisierung (durch die abwechselnde Orientierung der Flussdichte in den Luftspalten der permanentmagneterregten Pole und der elektromagnetisch erregten Pole wird dieses Magnetlager in der Folge als Multipollager bezeichnet) zur Stabilisierung von fünf Freiheitsgraden genutzt werden. Die Stabilisierung der beiden radialen Freiheitsgrade in der Rotorebene kann dabei aktiv erfolgen. Hingegen ist eine Stabilisierung in axialer Richtung und in Kipprichtung durch die Reluktanzkräfte (51 und 61), wie in den Fig. 4 und 5 gezeigt, möglich.

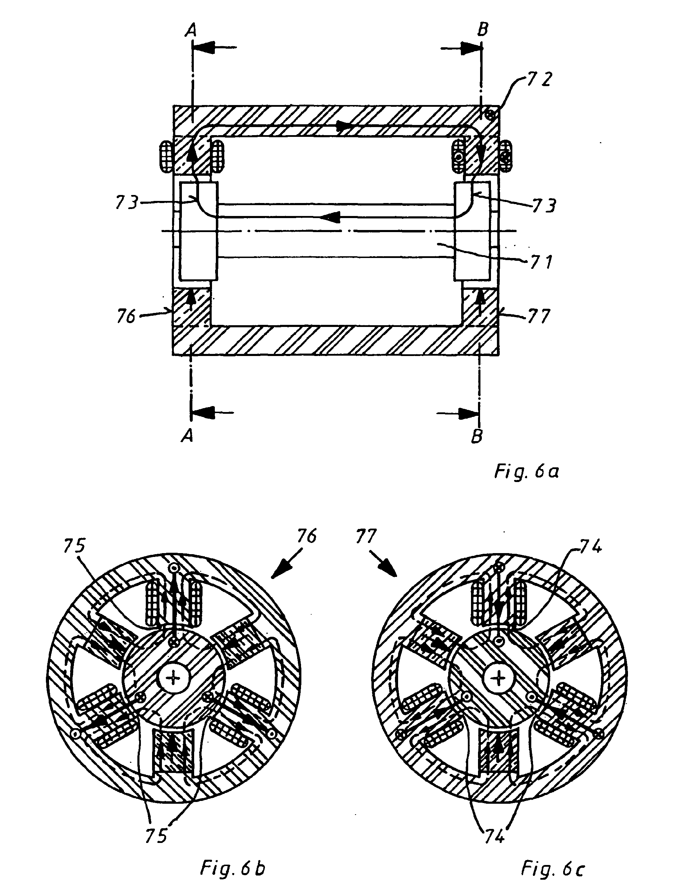

Eine weitere Anordnung, dargestellt in den Fig. 6a, 6b und 6c, zeigt eine Möglichkeit zur aktiven Stabilisierung von fünf Freiheitsgraden mit zwei Multipol-Teillagern (76, 77). Die Teillager (76, 77) sind äquivalent aufgebaut. Das Multipollager enthält drei Spulen, die getrennt angesteuert werden. Wird sowohl die Welle (71) als auch der Rückschluss (72) aus ferromagnetischen Material aufgebaut, entsteht ein weiterer Flusspfad, der wiederum, abgesehen von den Luftspalten, vollständig im ferromagnetischen Material verläuft. Erfolgt die Ansteuerung des linken Teillagers so wie in Fig. 6b dargestellt, stellt sich der gezeichnete magnetische Fluss (73) ein, wodurch die Flussdichte in den Luftspalten (74) geschwächt und in den Luftspalten (75) verstärkt wird.

Aufgrund der unterschiedlichen axialen Längen der Welle (71) und des Rückschlusses (72) stellt sich eine axiale Kraft auf den Rotor ein. Die Erzeugung des beschriebenen magnetischen Axialflusses kann entweder mit einem Teillager oder mit beiden Teillagern (76, 77) erfolgen.

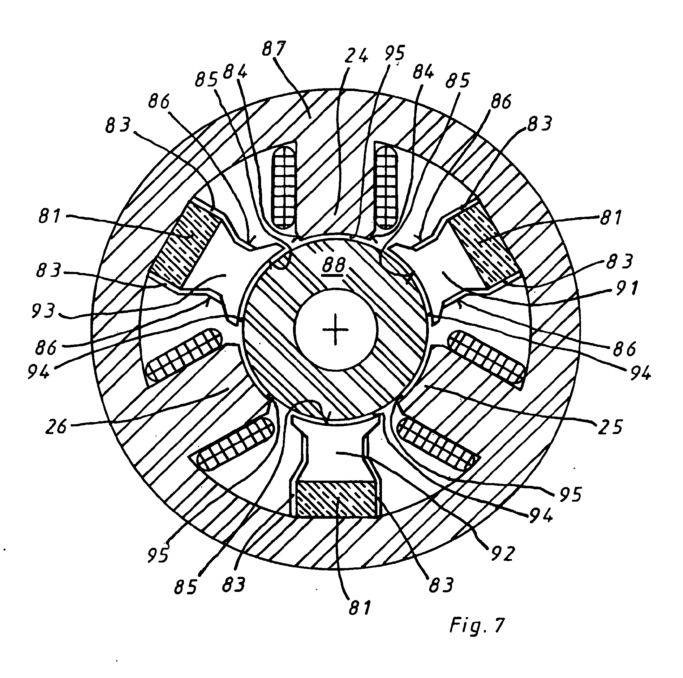

Ein hinsichtlich des fertigungstechnischen Aufwands sowie der Betriebsparameter für eine bestimmte Applikation optimiertes sechs-schenkeliges Multipollager mit einem Stator (87) und einem Rotor (88) ist in Fig. 7 dargestellt.

Die drei Permanentmagnete (81) sind bei dieser Ausführung vollständig von dem ferromagnetischen Material des Stators (87) umgeben. Dadurch ist einerseits eine sehr kostengünstige Fertigung möglich, da keine eng tolerierten Permanentmagnete erforderlich sind. Andererseits ist das spröde Magnetmaterial vollständig vom Blechschnitt umgeben, so dass keine mechanischen Kräfte auf das Magnetmaterial wirken können. Damit ein magnetischer Kurzschluss der Permanentmagnete vermieden wird, müssen die Flussleitstücke (83) so dünn ausgeführt werden, dass in diesen Bereichen das ferromagnetische Material in Sättigung geht.

Durch die mechanische Robustheit dieses Lagers ist ein Einsatz in Applikationen möglich, bei denen aufgrund der mechanischen Beanspruchung eine PM-Vormagnetisierung bislang nicht möglich war.

Das Betriebs- und Regelverhalten von Magnetlagern ist im wesentlichen durch den Strom-Kraft-Faktor und den Weg-Kraft-Faktor gekennzeichnet. Der Strom-Kraft-Faktor beschreibt dabei den Zusammenhang zwischen den Strangströmen und den Tragkräften. Der Weg-Kraft-Faktor beschreibt hingegen die Änderung der auf den Rotor wirkenden Kraft bei einer Verschiebung desselben. Somit ist der Kraft-Weg-Faktor ein Maß für die "Instabilität". Für den Betrieb ist ein möglichst großer Strom-Kraft-Faktor und gleichzeitig ein kleiner Weg-Kraft-Faktor wünschenswert. Die geometrische Ausführung des in Fig. 7 dargestellten Multipollagers ist hinsichtlich der eben beschriebenen Faktoren optimiert. Durch eine Verjüngung (84) der elektromagnetischen Pole (24, 25, 26) wird ein hoher Strom-Kraft-Faktor bei gleichzeitiger Minimierung des magnetischen Streuflusses erzielt. Einer Reduktion des Weg-Kraft-Faktors kann durch eine möglichst große Schenkelstirnfläche (85) Rechnung getragen werden. Eine Einschnürung (86) dient wiederum einer Streuflussminimierung.

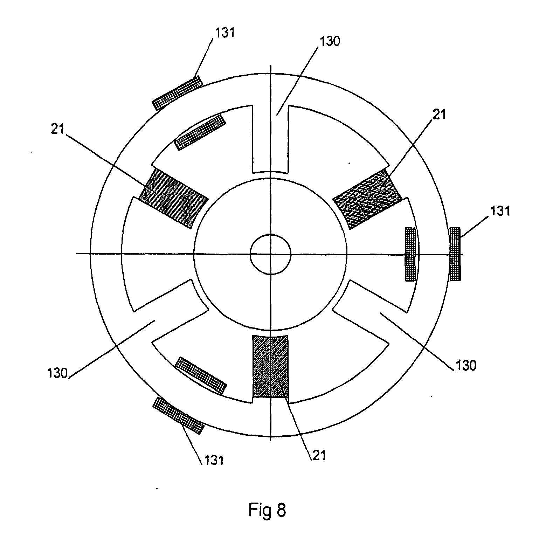

Fig. 8 zeigt eine weitere Anordnung, die ein dreiphasiges Multipollager mit im Stator angeordneten Spulen (131) darstellt. Die ferromagnetischen Schenkel (130) sind bei dieser Anordnung nicht mit Spulen bewickelt. Die Vormagnetisierung wird bei dieser Anordnung wiederum mit Hilfe von Permanentmagneten (21) erzeugt.

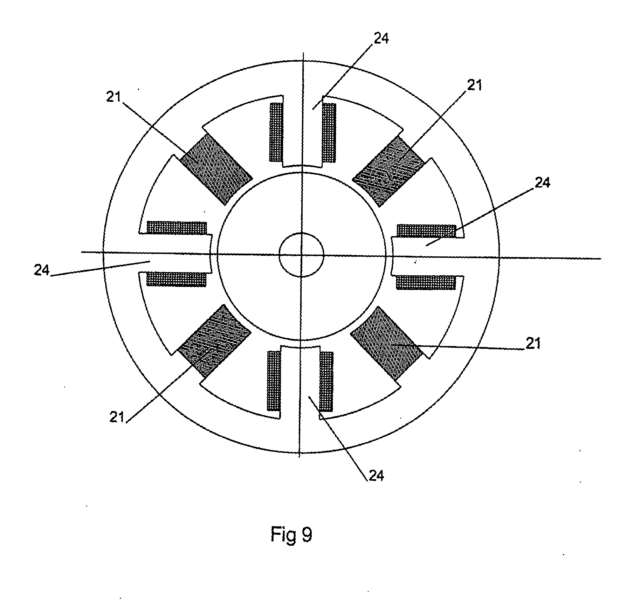

In Fig. 9 ist ein Lager mit vier elektromagnetischen Polen (24) und vier permanentmagnetischen Polen (21) dargestellt. Der Vorteil dieser Anordnung besteht darin, dass die Ansteuerung in kartesischen Hauptachsen erfolgt, wodurch in der elektronischen Ansteuerung eine Koordinatentransformation entfallen kann.

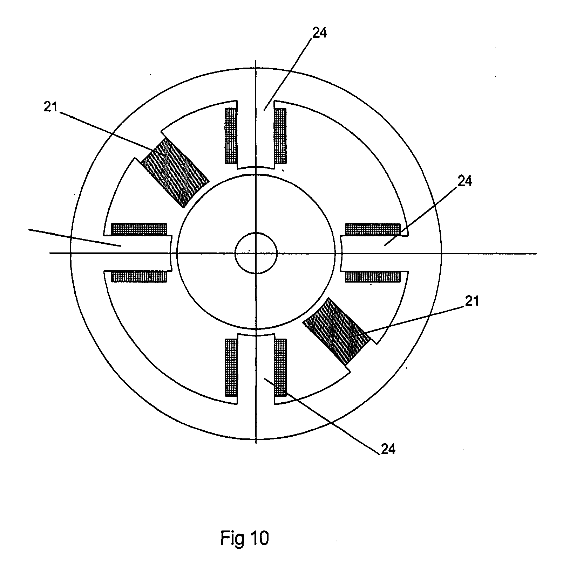

Fig. 10 zeigt eine weitere Variante mit zwei permanentmagnetischen Polen (21), die einander gegenüberliegend angeordnet sind sowie mit vier elektromagnetischen Polen.

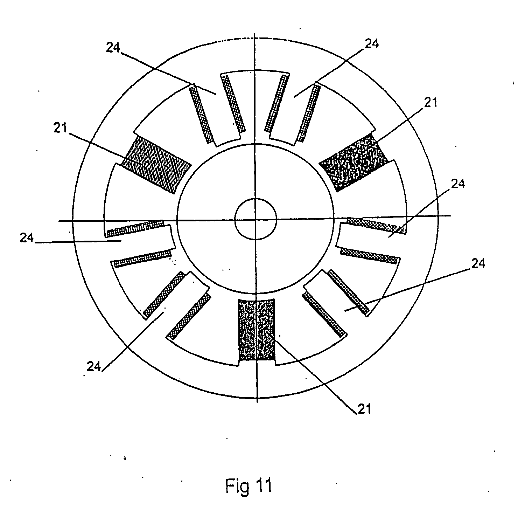

In Fig. 11 ist eine weitere Anordnung des Lagers dargestellt, bei der mehrere elektromagnetische Pole (24) nebeneinander zwischen den permanentmagnetischen Polen (21) angeordnet sind. Vorteilhaft ist diese Anordnung bei großen Anwendungen (einfache Spulenkonfiguration).

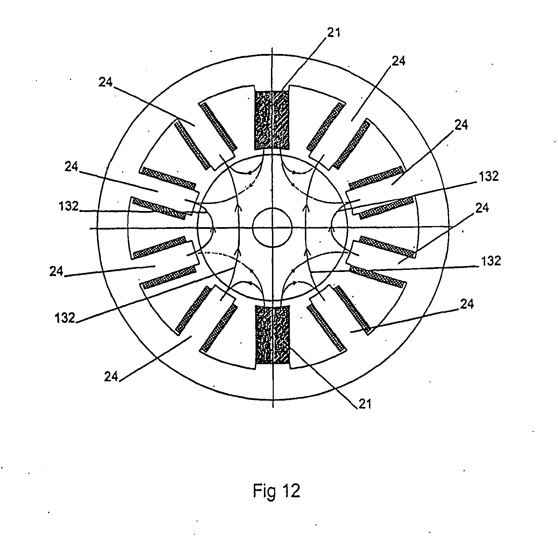

Fig. 12 zeigt eine weitere Ausführung durch ein Lager mit mehreren nebeneinander angeordneten elektromagnetischen Polen (24), die zwischen permanentmagnetischen Polen (21) angeordnet sind. Dabei weisen die elektromagnetischen Pole zum Teil unterschiedliche Magnetisierungsrichtungen (132) auf.

### Bezugszahlen

- 10: Magnetlager
- 11: Stator
- 20: Rotor
- 21: permanentmagnetische Pole
- 22: magnetischer Fluss
- 23: Spule
- 24: elektromagnetischer Pol
- 25: elektromagnetischer Pol
- 26: elektromagnetischer Pol
- 27, 28, 29: Luftspalte zwischen Rotor und elektromagnetischen Polen
- 30: magnetischer Fluss
- 51, 61: Reluktanzkräfte
- 71: Welle
- 72: Rückschluss
- 73: magnetischer Fluss
- 74, 75: Luftspalte
- 76, 77: Multipol-Teillager
- 81: Permanentmagnete
- 83: Flussleitstücke
- 84: Verjüngung
- 85: Schenkelstirnfläche
- 86: Einschnürung
- 87: Stator
- 88: Rotor
- 91, 92, 93: Polschuhe
- 94: Luftspalt
- 95: Luftspalt
- 130: ferromagnetische Schenkel
- 131: Spulen
- 132: Magnetisierungsrichtung
- A, B: Magnetisierungsrichtungen

## Patentansprüche

1. Magnetisches Lagersystem, bestehend aus mindestens einem Radiallager, wenigstens einer Ansteuereinheit sowie Stator-und Rotorelementen zur Erzeugung von radialen Kräften, wobei die flussbildenden und flussführenden Stator- und Rotorelemente aus ferromagnetischen Teilen, Spulen und Permanentmagneten gebildet werden, wobei in dem Stator (11, 87) des Radiallagers (10) zwischen elektromagnetischen Polen (24, 25, 26) mit mindestens einer Spule (23) mehrere Permanentmagnete (21, 81) vorgesehen sind, die als magnetische Pole ausgebildet sind, und die in einer Weise angeordnet sind, dass im Luftspalt (27, 28, 29; 95) in den Winkelbereichen der elektromagnetischen Pole (24, 25, 26) ein magnetischer Spannungsabfall durch die von den Permanentmagneten (21, 81) erzeugten Flüsse entsteht, bei dem die Permanentmagnete (21, 81) in einer Weise über dem Umfang angeordnet sind, dass sich durch die Permanentmagnete (21, 81) ausgelöste, auf die Rotorelemente wirkende Radialkräfte bei zentraler Lage des Rotors im Wesentlichen gegenseitig kompensieren, und bei dem die Spulen oder Spulensätze der elektromagnetischen Pole (24, 25, 26) stern- oder dreiecksförmig verschaltet sind und mit Leistungshalbleitern in Halbbrückenschaltung gespeist werden, oder bei dem die Spulen oder Spulensätze der elektromagnetischen Pole (24, 25, 26) über Leistungshalbleiter in Vollbrückenschaltung unabhängig gespeist werden.

2. Magnetisches Lagersystem nach Anspruch 1, **dadurch gekennzeichnet, dass** über den Betrag und das Vorzeichen der Spulenströme der Luftspaltfluss in den Winkelbereichen der elektromagnetischen Pole (24, 25, 26) derart einstellbar ist, dass dieser aus einer elektromagnetischen und einer permanentmagnetischen Komponente bestehende Fluss in den Luftspaltbereichen unterschiedlicher elektromagnetischer Pole (24, 25, 26) verschieden groß ist und somit über die Steuerung der Spulenströme eine bestimmte am Rotor (20) resultierende Radialkraft eingeprägt wird.

3. Magnetisches Lagersystem nach einem der vorhergehenden Ansprüche, **dadurch gekennzeichnet, dass** die elektromagnetischen Pole (24, 25, 26) und die permanentmagnetischen Pole (21, 81) eines Radiallagers im wesentlichen in einer Ebene liegen.

4. Magnetisches Lagersystem nach einem der vorhergehenden Ansprüche, **dadurch gekennzeichnet, dass** die permanentmagnetischen Pole (21; 91, 92, 93) derart ausgebildet und angeordnet sind, dass zumindest im stromlosen Zustand der Luftspaltfluss (22) in den Bereichen dieser Pole entweder gemeinsam nach innen oder nach außen gerichtet ist.

5. Magnetisches Lagersystem nach einem der vorhergehenden Ansprüche, **dadurch gekennzeichnet, dass** die permanentmagnetischen Pole (21; 81; 91, 92, 93) derart ausgebildet und angeordnet sind, dass der Steuerflussanteil der elektromagnetischen Pole (24, 25, 26), der sich über die permanentmagnetischen Pole (21, 81) schließt, kleiner ist als der Anteil, der sich über die elektromagnetischen Pole (24, 25, 26) schließt.

6. Magnetisches Lagersystem nach einem der vorhergehenden Ansprüche, **dadurch gekennzeichnet, dass** die permanentmagnetischen Pole (21, 81) derart ausgebildet und angeordnet sind, dass der Steuerfluss der elektromagnetischen Pole (24, 25, 26) sich praktisch nicht oder nur zu einem unwesentlichen Teil über die permanentmagnetischen Pole (21, 81) schließt.

7. Magnetisches Lagersystem nach einem der vorhergehenden Ansprüche, **dadurch gekennzeichnet, dass** die permanentmagnetischen Pole (21, 81) derart ausgebildet und angeordnet sind, dass die Magnete (81) mit einer Seitenfläche an den Luftspalt (94) grenzen.

8. Magnetisches Lagersystem nach einem der vorhergehenden Ansprüche, **dadurch gekennzeichnet, dass** die permanentmagnetischen Pole (21, 81) derart ausgebildet und angeordnet sind, dass die Begrenzungsfläche zum Luftspalt (94) durch ferromagnetisches Material gebildet wird.

9. Magnetisches Lagersystem nach einem der vorhergehenden Ansprüche, **dadurch gekennzeichnet, dass** die permanentmagnetischen Pole (21, 81) derart ausgebildet und angeordnet sind, dass die Begrenzungsfläche zum Luftspalt (94) durch Polschuhe (91, 92, 93) gebildet wird.

10. Magnetisches Lagersystem nach einem der vorhergehenden Ansprüche, **dadurch gekennzeichnet, dass** die permanentmagnetischen Pole (21, 81) derart ausgebildet und angeordnet sind, dass der Magnet (81) an beliebiger Stelle in ferromagnetisches Material eingebettet ist, wobei ein magnetischer Kurzschlussfluss der Magnete (81) durch entsprechend dünne in der magnetischen Sättigung betriebene Flussleitstücke (83) begrenzt wird.

11. Magnetisches Lagersystem nach einem der vorhergehenden Ansprüche, **dadurch gekennzeichnet, dass** die elektromagnetischen Pole (24, 25, 26) schenkelförmig mit konzentrierten Spulen oder genutet mit verteilten Spulen ausgebildet sind.

12. Magnetisches Lagersystem nach Anspruch 11, **dadurch gekennzeichnet, dass** die Spulen gesehnt ausgeführt sind.

13. Magnetisches Lagersystem nach einem der vorhergehenden Ansprüche, **dadurch gekennzeichnet, dass** im Stator (11) neben den permanentmagnetischen Polen (21) und/oder den elektromagnetischen Polen (24, 25, 26) zusätzlich wenigstens eine ferromagnetische Poläusbildung ohne die Verwendung von Spulen angeordnet ist.

14. Magnetisches Lagersystem nach einem der vorhergehenden Ansprüche, **dadurch gekennzeichnet, dass** die magnetische Führung der permanentmagnetischen und elektromagnetischen Flussanteile im Rotor durch die ferromagnetische Welle selbst erfolgt.

15. Magnetisches Lagersystem nach einem der vorhergehenden Ansprüche, **dadurch gekennzeichnet, dass** die Führung der permanentmagnetischen und elektromagnetischen Flussanteile im Rotor durch weichmagnetische massiv oder geblecht ausgeführte Materialien erfolgt.

16. Magnetisches Lagersystem nach einem der vorhergehenden Ansprüche, **dadurch gekennzeichnet, dass** infolge einer entsprechenden Steuerung der Spulenströme die Summe der über den gesamten Luftspaltumfang summierten Flüsse einen Wert gleich Null ergibt.

17. Magnetisches Lagersystem nach Anspruch 16, **dadurch gekennzeichnet, dass** keine Kraftbildung in axialer Richtung erfolgt.

18. Magnetisches Lagersystem nach einem der vorhergehenden Ansprüche, **dadurch gekennzeichnet, dass** die elektromagnetischen Pole (24, 25, 26) durch eine entsprechende Gestaltung der Polgeometrie derart aufgebaut sind, dass keine starken Flussaufweitungen zum Luftspalt hin gebildet werden.

19. Magnetisches Lagersystem nach Anspruch 18, **dadurch gekennzeichnet, dass** die elektromagnetischen Pole (24, 25, 26) durch eine annähernd parallele Ausbildung der Seitenflächen der Flussleitstücke (83) oder durch das Einbringen von Querschnittsverkleinerungen (84) im Bereich des Luftspaltes derart aufgebaut sind, dass keine starken Flussaufweitungen zum Luftspalt hin gebildet werden.

20. Magnetisches Lagersystem nach einem der vorhergehenden Ansprüche, **dadurch gekennzeichnet, dass** die permanentmagnetischen Pole (21, 81) durch eine entsprechende Gestaltung der Polgeometrie derart aufgebaut sind, dass keine starken Flusskonzentrationen zum Luftspalt (85) hin gebildet werden.

21. Magnetisches Lagersystem nach einem der vorhergehenden Ansprüche, **dadurch gekennzeichnet, dass** die elektromagnetischen Pole (24, 25, 26) und die permanentmagnetischen Pole (21, 81) durch eine entsprechende Gestaltung der Polgeometrie derart aufgebaut sind, dass vorgefertigte Spulen über die elektromagnetischen Pole (24, 25, 26) schiebbar sind.

22. Magnetisches Lagersystem nach Anspruch 21, **dadurch gekennzeichnet, dass** die elektromagnetischen Pole (24, 25, 26) und/oder die permanentmagnetischen Pole (21, 81) hinterschnittsfrei ausgebildet sind.

23. Magnetisches Lagersystem nach einem der vorhergehenden Ansprüche, **dadurch gekennzeichnet, dass** die permanentmagnetischen Pole (21, 81) und/oder die elektromagnetischen Pole (24, 25, 26) seitliche Einbuchtungen oder Einschnitte (86) aufweisen.

24. Magnetisches Lagersystem nach einem der vorhergehenden Ansprüche, **dadurch gekennzeichnet, dass** magnetische Flusserzeuger in Form von Spulen oder energiespeichernden Werkstoffen sich im Statorjoch befinden.

25. Magnetisches Lagersystem nach einem der vorhergehenden Ansprüche, **dadurch gekennzeichnet, dass** das Lagersystem mit zwei Radiallagern (76, 77) aufgebaut ist.

26. Magnetisches Lagersystem nach Anspruch 25, **dadurch gekennzeichnet, dass** die ferromagnetischen Rotorteile der beiden Radiallager (76, 77) axial zu den zugehörigen Statoren versetzt sind.

27. Magnetisches Lagersystem nach einem der vorhergehenden Ansprüche, **dadurch gekennzeichnet, dass** über eine entsprechende Steuerung der Spulenströme des Radiallagers oder der Radiallager, eine Summe der über den gesamten Luftspaltumfang addierten Flüsse mit einem Summenwert ungleich Null eingeprägt wird, so dass ein Flussanteil (73) sich über die Welle (71) und einem Rückschluss (72) über die Statoren schließt und sich durch die asymmetrische Lage von Stator und Rotor neben der radialen auch eine axiale Kraftentfaltung einstellt.

28. Magnetisches Lagersystem nach Anspruch 25, **dadurch gekennzeichnet, dass** die an den Luftspalt grenzenden Statorflächen und Rotorflächen der beiden Radiallager konisch ausgebildet sind, derart, dass jedes dieser Radiallager über die von den Spulen der elektromagnetischen Pole (24, 25, 26) erzeugte Steuerflüsse und dem permanentmagnetischen Flussanteil sowohl radiale als auch axiale Kraftkomponenten aufbaut.

29. Magnetisches Lagersystem nach Anspruch 1, **dadurch gekennzeichnet, dass** Sensoren und/oder Beobachter zur Ermittlung von Wegsignalen vorgesehen sind.

30. Magnetisches Lagersystem nach Anspruch 1, **dadurch gekennzeichnet, dass** die Ansteuereinheit eine Steuer- und eine Leistungselektronik aufweist.

31. Magnetisches Lagersystem nach Anspruch 1, **dadurch gekennzeichnet, dass** die Stator- und Rotorelemente zur Erzeugung von radialen und axialen Kräften vorgesehen sind.

32. Magnetisches Lagersystem nach Anspruch 31, **dadurch gekennzeichnet, dass** das Lagersystem als ein mit der Verschiebung der Wellenachse statische Tragkräfte kompensierendes Lagersystem ausgebildet ist.

## Claims

1. A magnetic bearing system consisting of at least one radial bearing, at least one control unit as well as stator and rotor elements for generating radial forces, wherein the flux-forming and flux-guiding stator and rotor elements are formed of ferromagnetic parts, coils and permanent magnets, wherein in the stator (11, 87) of the radial bearing (10), a plurality of permanent magnets (21, 81) are provided between electromagnetic poles (24, 25, 26) having at least one coil (23), which permanent magnets are in the form of magnetic poles and are arranged in such a manner that a magnetic voltage drop arises in the air gap (27, 28, 29; 95) in the angular regions of the electromagnetic poles (24, 25, 26) through the fluxes generated by the permanent magnets (21, 81), in which system the permanent magnets (21, 81) are arranged over the circumference in such a manner that radial forces brought about by the permanent magnets (21, 81) and acting upon the rotor elements substantially offset one another when the rotor is in the central position, and in which system the coils or coil assemblies of the electromagnetic poles (24, 25, 26) are interconnected in a star-shaped or triangle-shaped manner and are supplied by means of power semiconductors in a half bridge circuit, or in which system the coils or coil assemblies of the electromagnetic poles (24, 25, 26) are supplied independently via power semiconductors in a full bridge circuit.

2. A magnetic bearing system according to claim 1, **characterised in that** via the amount and the sign of the coil currents, the air-gap flux in the angular regions of the electromagnetic poles (24, 25, 26) is adjustable in such a manner that this flux consisting of an electromagnetic component and a permanent magnetic component differs in magnitude in the air-gap regions of different electromagnetic poles (24, 25, 26) and consequently a given radial force resulting at the rotor (20) is applied via control of the coil currents.

3. A magnetic bearing system according to any one of the preceding claims, **characterised in that** the electromagnetic poles (24, 25, 26) and the permanent magnetic poles (21, 81) of a radial bearing lie substantially in one plane.

4. A magnetic bearing system according to any one of the preceding claims, **characterised in that** the permanent magnetic poles (21; 91, 92, 93) are designed and arranged in such a manner that the air-gap flux (22) in the region of these poles is directed either inwards collectively or outwards, at least in the currentless state.

5. A magnetic bearing system according to any one of the preceding claims, **characterised in that** the permanent magnetic poles (21; 81; 91, 92, 93) are designed and arranged in such a manner that the control flux portion of the electromagnetic poles (24, 25, 26) which closes via the permanent magnetic poles (21, 81) is smaller than the portion which closes via the electromagnetic poles (24, 25, 26).

6. A magnetic bearing system according to any one of the preceding claims, **characterised in that** the permanent magnetic poles (21, 81) are designed and arranged in such a manner that the control flux of the electromagnetic poles (24, 25, 26) virtually does not close via the permanent magnetic poles (21, 81) or only to a negligible extent.

7. A magnetic bearing system according to any one of the preceding claims, **characterised in that** the permanent magnetic poles (21, 81) are designed and arranged in such a manner that the magnets (81) adjoin the air gap (94) by means of a lateral surface.

8. A magnetic bearing system according to any one of the preceding claims, **characterised in that** the permanent magnetic poles (21, 81) are designed and arranged in such a manner that the boundary surface with the air gap (94) is formed by ferromagnetic material.

9. A magnetic bearing system according to any one of the preceding claims, **characterised in that** the permanent magnetic poles (21, 81) are designed and arranged in such a manner that the boundary surface with the air gap (94) is formed by pole shoes (91, 92, 93).

10. A magnetic bearing system according to any one of the preceding claims, **characterised in that** the permanent magnetic poles (21, 81) are designed and arranged in such a manner that the magnet (81) is embedded in ferromagnetic material at any site, a magnetic short-circuit flux of the magnets (81) being restricted by appropriately thin flux-conducting parts (83) operated at magnetic saturation.

11. A magnetic bearing system according to any one of the preceding claims, **characterised in that** the electromagnetic poles (24, 25, 26) are limb-shaped with tightly-wound coils or slotted with distributed coils.

12. A magnetic bearing system according to claim 11, **characterised in that** the coils are short-pitched.

13. A magnetic bearing system according to any one of the preceding claims, **characterised in that** beside the permanent magnetic poles (21) and/or the electromagnetic poles (24, 25, 26), at least one ferromagnetic pole formation without the use of coils is additionally arranged in the stator (11).

14. A magnetic bearing system according to any one of the preceding claims, **characterised in that** the magnetic guiding of the permanent magnetic and electromagnetic flux portions in the rotor takes place by the ferromagnetic shaft itself.

15. A magnetic bearing system according to any one of the preceding claims, **characterised in that** the guiding of the permanent magnetic and electromagnetic flux portions in the rotor takes place by soft magnetic materials which are solid or laminated.

16. A magnetic bearing system according to any one of the preceding claims, **characterised in that** due to appropriate control of the coil currents, the sum of the fluxes added up over the entire air-gap circumference results in a value equal to zero.

17. A magnetic bearing system according to claim 16, **characterised in that** no force formation takes place in an axial direction.

18. A magnetic bearing system according to any one of the preceding claims, **characterised in that** through appropriate configuration of the pole geometry, the electromagnetic poles (24, 25, 26) are designed in such a manner that great flux widenings towards the air gap are not formed.

19. A magnetic bearing system according to claim 18, **characterised in that** by a substantially parallel formation of the lateral surfaces of the flux-conducting pieces (83) or by the introduction of reductions (84) in cross-sectional area in the region of the air gap, the electromagnetic poles (24, 25, 26) are designed in such a manner that great flux widenings towards the air gap are not formed.

20. A magnetic bearing system according to any one of the preceding claims, **characterised in that** by an appropriate configuration of the pole geometry, the permanent magnetic poles (21, 81) are designed in such a manner that great flux concentrations towards the air gap (85) are not formed.

21. A magnetic bearing system according to any one of the preceding claims, **characterised in that** by an appropriate configuration of the pole geometry, the electromagnetic poles (24, 25, 26) and the permanent magnetic poles (21, 81) are designed in such a manner that pre-manufactured coils can be pushed over the electromagnetic poles (24, 25, 26).

22. A magnetic bearing system according to claim 21, **characterised in that** the electromagnetic poles (24, 25, 26) and/or the permanent magnetic poles (21, 81) are undercut-free.

23. A magnetic bearing system according to any one of the preceding claims, **characterised in that** the permanent magnetic poles (21, 81) and/or the electromagnetic poles (24, 25, 26) have lateral indentations or recesses (86).

24. A magnetic bearing system according to any one of the preceding claims, **characterised in that** magnetic flux generators in the form of coils or energy-storing materials are located in the stator yoke.

25. A magnetic bearing system according to any one of the preceding claims, **characterised in that** the bearing system is designed with two radial bearings (76, 77).

26. A magnetic bearing system according to claim 25, **characterised in that** the ferromagnetic rotor parts of the two radial bearings (76, 77) are axially out-of-line with respect to the associated stators.

27. A magnetic bearing system according to any one of the preceding claims, **characterised in that** a sum value not equal to zero is imparted to a sum of the fluxes added up over the entire air-gap circumference via appropriate control of the coil currents of the radial bearing or the radial bearings, so that a flux portion (73) closes via the shaft (71) and a yoke (72) via the stators and an axial force is also generated in addition to the radial force through the asymmetrical position of the stator and the rotor.

28. A magnetic bearing system according to claim 25, **characterised in that** the air-gap-bordering stator surfaces and rotor surfaces of the two radial bearings are tapered in such a manner that each of these radial bearings builds up both radial and axial force components via the control fluxes, generated by the coils of the electromagnetic poles (24, 25, 26), and the permanent-magnet flux portion.

29. A magnetic bearing system according to claim 1, **characterised in that** sensors and/or observers are provided to ascertain displacement signals.

30. A magnetic bearing system according to claim 1, **characterised in that** the control unit has control electronics and power electronics.

31. A magnetic bearing system according to claim 1, **characterised in that** the stator elements and rotor elements are provided to generate radial and axial forces.

32. A magnetic bearing system according to claim 31, **characterised in that** the bearing system is in the form of a bearing system compensating static inertial forces by means of the displacement of the shaft axis.

## Revendications

1. Système de suspension magnétique, se composant d'au moins un palier radial, d'au moins une unité de commande ainsi que d'éléments de stator et de rotor pour la génération de forces radiales, dans lequel les éléments de stator et de rotor formant et guidant le flux sont formés d'éléments ferromagnétiques, de bobines et d'aimants permanents, dans lequel, dans le stator (11, 87) du palier radial (10) entre des pôles (24, 25, 26) électromagnétiques avec au moins une bobine (23) étant prévus plusieurs aimants permanents (21, 81) qui sont réalisés comme des pôles magnétiques et qui sont disposés de manière à ce que dans l'entrefer (27, 28, 29 ; 95) dans les zones angulaires des pôles (24, 25, 26) électromagnétiques apparaisse une chute de tension magnétique par les flux générés par les aimants permanents (21, 81), pour laquelle les aimants permanents (21, 81) sont disposés sur la périphérie de manière à ce que des forces radiales agissant sur les éléments de rotor, déclenchées par les aimants permanents (21, 81) se compensent en cas de position centrale du rotor essentiellement mutuellement et pour laquelle les bobines ou les jeux de bobines des pôles (24, 25, 26) électromagnétiques sont connectés en forme d'étoile ou de triangle et sont alimentés en semi-conducteurs de puissance en montage en demi-pont, ou pour laquelle les bobines ou jeux de bobine des pôles (24, 25, 26) électromagnétiques sont alimentés indépendamment par des semi-conducteurs de puissance en montage en pont intégral.

2. Système de suspension magnétique selon la revendication 1, **caractérisé en ce que** le flux d'entrefer dans les zones angulaires des pôles (24, 25, 26) électromagnétiques peut être réglé par la valeur et le signe des courants de bobine de telle sorte que ce flux se composant d'un composant électromagnétique et d'un composant à aimant permanent soit de grandeur différente dans les zones d'entrefer de différents pôles (24, 25, 26) électromagnétiques et ainsi une force radiale déterminée résultant sur le rotor (20) soit appliquée par la commande des courants de bobine.

3. Système de suspension magnétique selon l'une quelconque des revendications précédentes, **caractérisé en ce que** les pôles (24, 25, 26) électromagnétiques et les pôles (21, 81) à aimant permanent d'un palier radial sont essentiellement dans un plan.

4. Système de suspension magnétique selon l'une quelconque des revendications précédentes, **caractérisé en ce que** les pôles à aimant permanent (21 ; 91, 92, 93) sont réalisés et disposés de sorte qu'au moins à l'état sans courant, le flux d'entrefer (22) dans les zones de ces pôles soit dirigé conjointement vers l'intérieur ou vers l'extérieur.

5. Système de suspension magnétique selon l'une quelconque des revendications précédentes, **caractérisé en ce que** les pôles (21 ; 81 ; 91, 92, 93) à aimant permanent sont réalisés et disposés de sorte que la part de flux de commande des pôles (24, 25, 26) à aimant permanent qui se ferme par les pôles (21, 81) à aimant permanent soit inférieure à la part qui se ferme par les pôles (24, 25, 26) électromagnétiques.

6. Système de suspension magnétique selon l'une quelconque des revendications précédentes, **caractérisé en ce que** les pôles (21, 81) à aimant permanent sont réalisés et disposés de sorte que le flux de commande des pôles (24, 25, 26) électromagnétiques ne se ferme pratiquement pas ou seulement une partie non essentielle par les pôles (21, 81) à aimant permanent.

7. Système de suspension magnétique selon l'une quelconque des revendications précédentes, **caractérisé en ce que** les pôles (21, 81) à aimant permanent sont réalisés et disposés de sorte que les aimants (81) jouxtent avec une face latérale l'entrefer (94).

8. Système de suspension magnétique selon l'une quelconque des revendications précédentes, **caractérisé en ce que** les pôles (21, 81) à aimant permanent sont réalisés et disposés de sorte que la surface de délimitation par rapport à l'entrefer (94) soit formée par du matériau ferromagnétique.

9. Système de suspension magnétique selon l'une quelconque des revendications précédentes, **caractérisé en ce que** les pôles (21, 81) à aimant permanent sont réalisés et disposés de sorte que la surface de délimitation par rapport à l'entrefer (94) soit formée par des pièces polaires (91, 92, 93).

10. Système de suspension magnétique selon l'une quelconque des revendications précédentes, **caractérisé en ce que** les pôles (21, 81) à aimant permanent sont réalisés et disposés de sorte que l'aimant (81) soit encastré à un endroit quelconque dans le matériau ferromagnétique, un flux de court-circuit magnétique des aimants (81) étant limité par des pièces conductrices de flux (83) fonctionnant dans la saturation magnétique, minces en conséquence.

11. Système de suspension magnétique selon l'une quelconque des revendications précédentes, **caractérisé en ce que** les pôles (24, 25, 26) électromagnétiques sont réalisés en forme de branche avec des bobines concentrées ou rainurés avec des bobines réparties.

12. Système de suspension magnétique selon la revendication 11, **caractérisé en ce que** les bobines sont réalisées enroulées partiellement.

13. Système de suspension magnétique selon l'une quelconque des revendications précédentes, **caractérisé en ce que** dans le stator (11) à côté des pôles (21) à aimant permanent et/ou des pôles (24, 25, 26) électromagnétiques est disposée en outre au moins une réalisation polaire ferromagnétique sans utilisation de bobines.

14. Système de suspension magnétique selon l'une quelconque des revendications précédentes, **caractérisé en ce que** le guidage magnétique des parts de flux à aimant permanent et électromagnétiques est effectué dans le rotor par l'arbre ferromagnétique même.

15. Système de suspension magnétique selon l'une quelconque des revendications précédentes, **caractérisé en ce que** le guidage des parts de flux à aimant permanent et électromagnétiques dans le rotor est effectué par des matériaux magnétiques doux, réalisés massifs ou feuilletés.

16. Système de suspension magnétique selon l'une quelconque des revendications précédentes, **caractérisé en ce qu'**à la suite d'une commande correspondante des courants de bobines, la somme des flux additionnés sur la périphérie entière de l'entrefer produit une valeur égale à zéro.

17. Système de suspension magnétique selon la revendication 16, **caractérisé en ce qu'**une formation de force dans le sens axial n'a pas lieu.

18. Système de suspension magnétique selon l'une quelconque des revendications précédentes, **caractérisé en ce que** les pôles (24, 25, 26) électromagnétiques sont constitués par une forme correspondante de géométrie polaire de sorte qu'aucun élargissement de flux fort vers l'entrefer ne soit formé.

19. Système de suspension magnétique selon l'une quelconque des revendications précédentes, **caractérisé en ce que** les pôles (24, 25, 26) électromagnétiques sont constitués par une réalisation approximativement parallèle des surfaces latérales des pièces conductrices de flux (83) ou par l'introduction de réductions de section (84) dans la zone de l'entrefer de sorte qu'aucun élargissement de flux fort vers l'entrefer ne soit formé.

20. Système de suspension magnétique selon l'une quelconque des revendications précédentes, **caractérisé en ce que** les pôles (21, 81) magnétiques permanents sont constitués par une forme correspondante de géométrie polaire de sorte qu'aucune concentration de flux forte vers l'entrefer (85) ne soit formée.

21. Système de suspension magnétique selon l'une quelconque des revendications précédentes, **caractérisé en ce que** les pôles (24, 25, 26) électromagnétiques et les pôles (21, 81) à aimant permanent sont constitués par une forme correspondante de géométrie polaire de sorte que des bobines préfabriquées puissent être poussées par les pôles (24, 25, 26) électromagnétiques.

22. Système de suspension magnétique selon la revendication 21, **caractérisé en ce que** les pôles (24, 25, 26) électromagnétiques et/ou les pôles (21, 81) à aimant permanent sont réalisés sans contre-dépouille.

23. Système de suspension magnétique selon l'une quelconque des revendications précédentes, **caractérisé en ce que** les pôles (21, 81) à aimant permanent et/ou les pôles (24, 25, 26) électromagnétiques présentent des dentelures ou des encoches (86) latérales.

24. Système de suspension magnétique selon l'une quelconque des revendications précédentes, **caractérisé en ce que** des générateurs de flux magnétiques sous la forme de bobines ou de matériaux à accumulation d'énergie se trouvent dans la culasse de stator.

25. Système de suspension magnétique selon l'une quelconque des revendications précédentes, **caractérisé en ce que** le système de suspension est conçu avec deux paliers radiaux (76, 77).

26. Système de suspension magnétique selon la revendication 25, **caractérisé en ce que** les parties de rotor ferromagnétiques des deux paliers radiaux (76, 77) sont décalées axialement par rapport aux stators correspondants.

27. Système de suspension magnétique selon l'une quelconque des revendications précédentes, **caractérisé en ce que** par une commande correspondante des courants de bobine du palier radial ou des paliers radiaux, une somme des flux additionnés sur la périphérie entière d'entrefer avec une valeur de somme inégale à zéro est appliquée de sorte qu'une part de flux (73) se ferme par l'arbre (71) et une dérivation (72) par les stators et il s'établit, par la position asymétrique du stator et du rotor, outre le déploiement de force radial, un déploiement de force axial aussi.

28. Système de suspension magnétique selon la revendication 25, **caractérisé en ce que** les surfaces de stator et les surfaces de rotor jouxtant l'entrefer des deux paliers radiaux sont réalisées coniques de sorte que chacun de ces paliers radiaux constitue par les flux de commande générés par les bobines des pôles (24, 25, 26) électromagnétiques et la part de flux à aimant permanent, des composantes de force radiales ainsi qu'axiales.

29. Système de suspension magnétique selon la revendication 1, **caractérisé en ce que** des capteurs et/ou des observateurs sont prévus pour la détermination des signaux de course.

30. Système de suspension magnétique selon la revendication 1, **caractérisé en ce que** l'unité de commande présente un système électronique de commande et de puissance.

31. Système de suspension magnétique selon la revendication 1, **caractérisé en ce que** les éléments de stator et de rotor sont prévus pour la génération de forces radiales et axiales.

32. Système de suspension magnétique selon la revendication 31, **caractérisé en ce que** le système de suspension est réalisé comme un système de suspension compensant des forces portantes statiques avec le décalage de l'axe de l'arbre.
